# EUROPEAN PATENT SPECIFICATION

(11) **EP 2 638 816 B1**
(45) Date of publication and mention of the grant of the patent: **14.06.2017**
(21) Application number: 10859463.1
(22) Date of filing: 08.11.2010
(51) Int. Cl.: A43B 13/18, A43B 13/20, A43B 7/08, B29D 35/14

(54) **HOLLOW FOOTWEAR SOLE AND METHOD FOR MANUFACTURING SAME**
HOHLE SCHUHSOHLE UND VERFAHREN ZU IHRER HERSTELLUNG
SEMELLE CREUSE POUR CHAUSSURE ET PROCÉDÉ DE FABRICATION DE LADITE SEMELLE

(43) Date of publication of application: 18.09.2013
(73) Proprietor: Desarrollo Integral Del Molde, S.L., 31013 Pamplona, Navarra (ES)
(72) Inventor: IZQUIETA ANAUT, José María, E-31013 Pamplona Navarra (ES)
(74) Representative: Capitán García, Maria Nuria
(86) International application number: PCT/ES2010/070722
(87) International publication number: WO 2012/062936

(56) References cited:
- EP-A2- 0 815 757
- ES-T3- 2 103 985
- ES-T3- 2 160 121
- US-A- 4 864 737
- US-A- 4 999 931
- US-A- 4 999 931
- US-A- 5 518 802
- US-A- 6 029 962
- US-A1- 2002 119 276
- US-A1- 2005 132 610
- US-A1- 2006 277 685
- US-B1- 6 976 321

## Description

### TECHNICAL FIELD OF THE INVENTION

The present invention lies in the field of hollow soles for footwear.

This invention is a hollow sole for footwear that combines several cushioning methods meant to absorb the greatest range of possible loads with a simple and easily adjustable configuration.

### BACKGROUND OF THE INVENTION

Hollow soles for footwear are known formed by two parts joined to each other to configure a hollow part between them that is filled with air, as shown by the same applicant in Spanish Utility Model with application number 201030592.

This type of sole is convenient for different uses due to its shock-absorbing qualities, which are inherent to the configuration of the sole, which results in a specific mechanical behaviour. For this reason, modifications in the shock-absorbing properties are meant to modify the configurations that are compressed, normally truncated pyramids or prisms, as well as modifying the type of material used to manufacture the sole, which will provide the restoration from the compression.

Other known types of sole use solid configurations of different plastic components, combining different hardness and elastic properties. In this case, however, the soles tend to have poor lateral support, as it is the structure of the plastic material that must withstand the lateral load, so that it is not uncommon to see feet with excessive pronation or supination.

In both hollow and solid soles, once a problem is known and the corresponding adjustment is decided, it is complicated and expensive to carry it out, as it involves acting on a single factor, either the configuration or the material, which has a working range that may be inadequate for solving the problem.

Thus, configurations made of rubber in hollow soles of geometric type, such as truncated cones and others, are suitable for absorbing high impact forces, such as the first contact of the heel with the ground. However, plastic foams in solid soles are suitable for medium and small impacts, such as during foot roll and toe lift.

It is known the patent US 6,029,962 wherein a shock absorbing component and its construction method is disclosed, such component suitable for footwear, including a bottom half and a top half, both comprising a sheet and hollow vertical configurations, indentations, oriented towards the interior of the component, that define internal pockets filled with hollow inserts.

It is also known the patent 2006/0277685 wherein a cushioning system is disclosed, such system suitable for footwear, including a bottom half and a top half, both comprising a sheet and hollow vertical configurations, oriented towards the interior of the component, that define internal pockets, the top half ones filled with a foam leaving a gas chamber in front of the foam.

For this reason, no soles are known that combine in an optimum manner several cushioning methods to cover a wide range of loads and that are easily adjustable while designing the sole. That is, on one hand a structure made of a strong material, normally rubber, that supports greater loads and provides the support pillars for said structure, and on the other components that support smaller loads and that generally provide a sensation of comfort to the user.

The present invention discloses a sole that combines several cushioning methods meant to solve the drawbacks of the state of the art and absorb the greatest range of possible loads with a simple and easily adjustable configuration.

### DESCRIPTION OF THE INVENTION

The present invention is established and characterised in the independent claims, while the dependent claims describe additional characteristics thereof.

In view of the foregoing, the present invention relates to a hollow sole for footwear that comprises a bottom half and a top half, the top half in turn comprising a sheet and hollow vertical configurations that define internal pockets, with the hollow base integrated in said sheet, and said hollow vertical configurations being oriented towards the inside of the sole, the bottom half being disposed such that it contacts the surfaces of the hollow vertical configurations that face the inside of the sole, wherein the internal pockets of the hollow vertical configurations of the top half are at least half-filled by a shock-absorbing plastic material, the hollow vertical configurations of the top half are filled such that a gas chamber is left between the front of the shock-absorbing material and the free surface of the hollow vertical configurations, and the sheet of the top half includes through orifices.

### BRIEF DESCRIPTION OF THE DRAWINGS

This specification is supplemented with a set of drawings illustrating the preferred embodiment, which are never intended to limit the invention.
Figure 1 represents a cross section of an embodiment of prior art in which the shock-absorbing material reaches beyond the top part of the top half.
Figure 2 represents a cross section of the same embodiment of prior art in which the shock-absorbing material does not reach beyond the top part of the top half.
Figure 3 represents a cross section of an embodiment of the invention in which the shock-absorbing material reaches beyond the top part of the top half and includes through orifices.
Figure 4 represents a cross section of the same embodiment of prior art in which the shock-absorbing material does not reach beyond the top part of the top half.

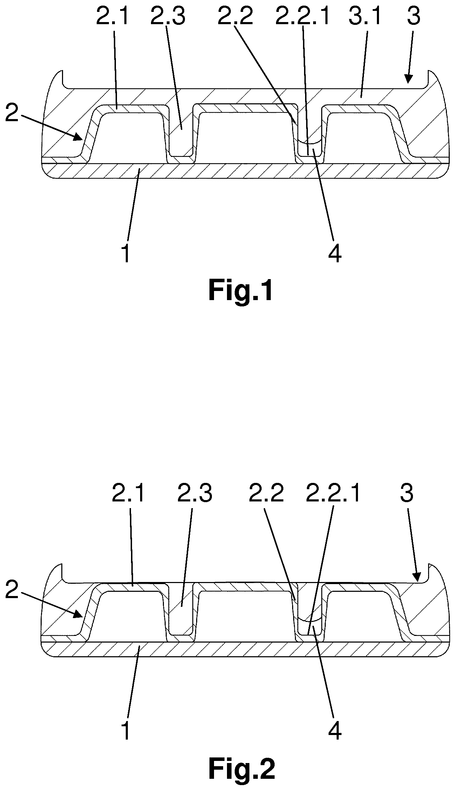

Figures 1, 2 and 4 and the soles concerned do not form part of the invention but represent background art that is useful for understanding the invention.

### DETAILED DESCRIPTION OF THE PREFERRED EMBODIMENT OF THE INVENTION

An embodiment of prior art, figure 1, is described in what follows wherein the sole comprises a bottom half (1) and a top half (2), in the form of two shells or one shell and a lid, such that air is trapped inside it, between the two halves (1,2), which air can be at atmospheric pressure or at a greater pressure in order to cushion shocks when striking the ground. To ensure that the pressure is maintained, in the top half (2) normally an orifice is made (not shown) that is either sealed or is provided with a flow-control valve, of those known, to the internal pocket defined between the two halves (1,2).

The top half (2) in turn comprises a sheet (2.1) and hollow vertical configurations (2.2) that form internal pockets (2.3), with the base being integrated in said sheet (2.1), said hollow vertical configurations (2.2) being oriented towards the inside of the sole. This is, the hollow configurations (2.2) are integrated in the sheet (2.1) to form a single continuous surface.

In one embodiment of prior art, figure 2, the other half (1) is disposed such that it contacts the surface of the hollow vertical configurations (2.2) that is facing the inside of the sole. In this way, the bottom half (1) acts as a cover and as the part of the sole that contacts the ground.

The above configuration provides cushioning due to the elasticity of the sole material, normally rubber, together with the mechanical characteristics of the hollow vertical configurations (2.2), which are normally truncated cones, cylinders or prisms. There is a second cushioning provided by the compression of air caused by each step, whether or not the air is at a pressure above atmospheric pressure, as in the step the internal volume of the sole is always reduced by the compression of the material that allows the hollow vertical configurations (2.2) to compress and later recover their original shape.

These two cushioning forms are those known in hollow soles; in this embodiment, a third form is added by filling the internal pockets (2.3) of the hollow configurations of the top half to at least half of their volume, or even completely, with a shock-absorbing plastic material (3). In this way, in the step the elastic characteristics of the footwear sole material are combined with hollow vertical configurations (2.2) filled with a specific material appropriate for the mechanical loads of the step, so that the impact is absorbed better and the recovery is optimised, as well as providing a feeling of comfort and safety to the user.

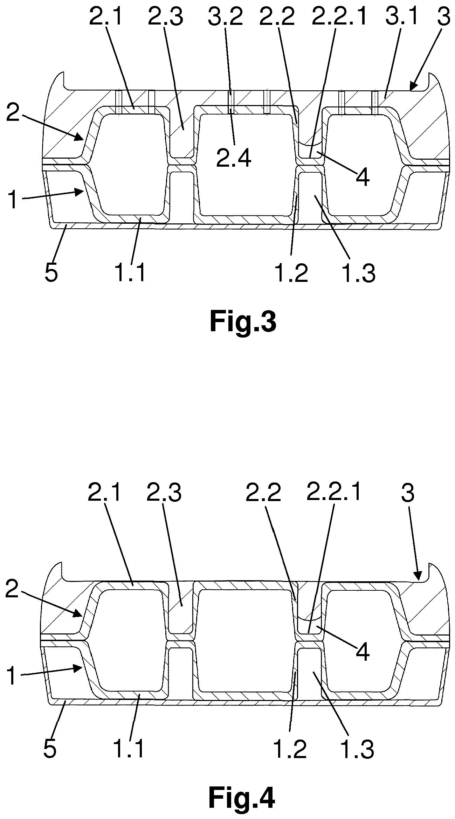

In a variant of the above-described embodiments of prior art the two halves (1,2) are similar, figure 4, that is, the bottom half (1) comprises a sheet (1.1) and hollow vertical configurations (1.2), which form internal pockets (1.3), the base being integrated in said sheet (1.1) so that said hollow vertical configurations (1.2) are facing the inside of the sole, such that they contact the surfaces of the hollow configurations (1.2,2.2) facing the inside of the sole in each of the halves (1,2).

In this case it may be convenient to add an additional sheet (5) acting as a sole in contact with the ground.

In this variant, the hollow vertical configurations (1.2, 2.2) are duplicated and act jointly, with the two halves (1,2) opposite each other, resulting in a greater cushioning, in other words, adjusting to a different cushioning scale, as the fine adjustment of the cushioning in any of the embodiments shown is performed by combining all the variables involved: material of the halves, air compression between the halves, geometry of the hollow vertical configurations (1.2, 2.2) and filler material (3) therefor.

As stated above, the hollow vertical configurations (1.2,2.2) are preferably truncated pyramids, truncated cones, cylinders or prisms.

An advantageous manner of filling the hollow vertical configurations (2.2) of the top half (2) is filling them to the top surface of the latter. In this way, the shoe cut closes directly on the top half (2) of the sole.

Another advantageous manner of filling the hollow configurations (2.2) of the top half (2) is until passing the upper surface of the top half (2), so that a sheet (3.1) is created above the top half made of the shock-absorbing plastic material (3). The shoe cut will then be placed on top of this sheet (3.1).

Both advantageous variants can include through orifices (2.4, 3.2) that place the hollow inside of the sole with the cut, and thus with the user's foot, directly in contact with the air chamber between the two halves (1,2). In this way the foot will be cooled better in warm weather. It is clear that as the air chamber is communicated with the outside, the air in it can never be at a pressure greater than atmospheric pressure.

Specifically, in the embodiment with the sheet (3.1) above the top half (2) of the shock-absorbing plastic material (3), this half (2) has through orifices (2.4) that coincide with the through orifices (3.2) of the sheet (3.1) of the top half (2), figure 2.

In addition to the three aforementioned cushioning methods, a fourth one can be added that consists in using the gas generated when setting the materials so that in the hollow configurations of the (2.2) of the top half, a gas chamber (4) is defined between the front of the shock-absorbing material (3) and the free surface (2.2.1), by which is meant the surface that is not the base integrated in the sheet (2.1) that is facing the inside of the sole, of the hollow configurations (2.2).

Preferably, the shock-absorbing plastic material (3) used is polyurethane.

The manufacturing method for a footwear sole as described above always includes the following stages:
- moulding the top half (2),
- moulding the bottom half (1),
- joining the two halves (1,2),
- introducing the shock-absorbing material (3) to the top half (2) by injection or casting.

When the sole is of the type in which the shock-absorbing material (3) does not extend beyond the top surface of the top half (2), before introducing the shock-absorbing material (3) in the top half (2) the shoe cut is placed flush against the top half (2), so that this cut acts as a countermould.

Instead, when the shoe cut is not placed because the shock-absorbing material (3) extends beyond the top surface of the top half (2), before introducing the shock-absorbing material (3) in the top half (2) it will be necessary to place a countermould in order to leave a space between the top half (2) and said countermould, so that the shock-absorbing material (3) approximately forms a sheet (3.1) above the top half (2) of the sole.

## Claims

1. Hollow sole for footwear that comprises a bottom half (1) and a top half (2), the top half (2) in turn comprising a sheet (2.1) and hollow vertical configurations (2.2) that define internal pockets (2.3), the hollow base being integrated in said sheet (2.1), said hollow vertical configurations (2.2)being oriented towards the inside of the sole, the bottom half (1) being disposed such that it contacts the surfaces of the hollow vertical configurations (2.2) that face the inside of the sole, the internal pockets (2.3) of the hollow vertical configurations (2.2) of the top half (2) are half-filled by a shock-absorbing plastic material (3), the hollow vertical configurations (2.2) of the top half (2) are filled such that a gas chamber (4) is left between the front of the shock-absorbing material (3) and the free surface (2.2.1) of the hollow vertical configurations (2.2), **characterised in that** the sheet (2.1) of the top half (2) includes through orifices (2.4).

2. Hollow sole for footwear according to claim 1, **characterised in that** the bottom half (1) comprises a sheet (1.1) and hollow vertical configurations (1.2), which form internal pockets (1.3), the base being integrated in said sheet (1.1) so that said hollow vertical configurations (1.2) face the inside of the sole such that they contact the surfaces of the hollow configurations (1.2,2.2) facing the inside of the sole in each of the halves (1,2).

3. Hollow sole for footwear according to claims 1 or 2, **characterised in that** the hollow vertical configurations (1.2,2.2) are truncated pyramids, truncated cones, cylinders or prisms.

4. Hollow sole for footwear according to claims 1 or 2, **characterised in that** the hollow vertical configurations (2.2) of the top half (2) are filled up to the top surface of the top half (2).

5. Hollow sole for footwear according to claims 1 or 2, **characterised in that** the hollow vertical configurations (2.2) of the top half (2) are filled beyond the upper surface of the top half (2), so that a sheet (3.1) is created above the top half (2) made of the shock-absorbing plastic material (3).

6. Hollow sole for footwear according to any of the above claims, **characterised in that** the shock-absorbing plastic material (3) is polyurethane.

7. Hollow sole for footwear according to claim 5, **characterised in that** the sheet (3.1) above the top half (2) is made of the shock-absorbing plastic material (3), this half (2) having through orifices (2.4) that coincide with the through orifices (3.2) of the sheet (3.1) of the top half (2).

8. Manufacturing method for a footwear sole according to claim 7, wherein it comprises the following stages:
- moulding the top half (2),
- moulding the bottom half (1),
- joining the two halves (1,2),
- introducing the shock-absorbing material (3) to the top half (2) by injection or casting
**characterised in that** before introducing the shock-absorbing material (3) in the top half (2) the shoe cut is placed flush on the top half (2) or a countermould is placed to leave a space between the top half (2) and said countermould so that the shock-absorbing material (3) forms a sheet (3.1) on the top half (2) of the sole.

9. Manufacturing method for a footwear sole according to claim 8, **characterised in that** the shock-absorbing plastic material (3) is polyurethane.

## Patentansprüche

1. Hohle Sohle für Schuhwerk, die eine untere Hälfte (1) und eine obere Hälfte (2) umfasst, wobei die obere Hälfte (2) wiederum eine Lage (2.1) und hohle vertikale Konfigurationen (2.2) umfasst, die interne Hohlräume (2.3) definieren, wobei die hohle Basis in die Lage (2.1) integriert ist, wobei die hohlen vertikalen Konfigurationen (2.2) zur Innenseite der Sohle hin ausgerichtet sind, wobei die untere Hälfte (1) so angeordnet ist, dass sie in Kontakt mit den Oberflächen der hohlen vertikalen Konfigurationen (2.2) ist, die der Innenseite der Sohle zugewandt sind, wobei die internen Hohlräume (2.3) der hohlen vertikalen Konfigurationen (2.2) der oberen Hälfte (2) halb mit einem stoßabsorbierenden Kunststoffmaterial (3) gefüllt sind, wobei die hohlen vertikalen Konfigurationen (2.2) der oberen Hälfte (2) so gefüllt sind, dass eine Gaskammer (4) zwischen der Vorderseite des stoßabsorbierenden Materials (3) und der freien Oberfläche (2.2.1) der hohlen vertikalen Konfigurationen (2.2) verbleibt, **dadurch gekennzeichnet, dass** die Lage (2.1) der oberen Hälfte (2) Durchgangsöffnungen (2.4) umfasst.

2. Hohle Sohle für Schuhwerk nach Anspruch 1,
**dadurch gekennzeichnet, dass** die untere Hälfte (1) eine Lage (1.1) und hohle vertikale Konfigurationen (1.2) umfasst, die interne Hohlräume (1.3) bilden, wobei die Basis in die Lage (1.1) integriert ist, sodass die hohlen vertikalen Konfigurationen (1.2) der Innenseite der Sohle zugewandt sind, sodass sie in Kontakt mit den Oberflächen der hohlen Konfigurationen (1.2, 2.2) sind, die der Innenseite der Sohle in jeder der Hälften (1,2) zugewandt sind.

3. Hohle Sohle für Schuhwerk nach Anspruch 1 oder 2, **dadurch gekennzeichnet, dass** die hohlen vertikalen Konfigurationen (1.2, 2.2) Pyramidenstumpfe, Kegelstumpfe, Zylinder oder Prismen sind.

4. Hohle Sohle für Schuhwerk nach Anspruch 1 oder 2, **dadurch gekennzeichnet, dass** die hohlen vertikalen Konfigurationen (2.2) der oberen Hälfte (2) bis zur Oberseite der oberen Hälfte (2) aufgefüllt sind.

5. Hohle Sohle für Schuhwerk nach Anspruch 1 oder 2, **dadurch gekennzeichnet, dass** die hohlen vertikalen Konfigurationen (2.2) der oberen Hälfte (2) über die Oberseite der oberen Hälfte (2) hinaus gefüllt sind, sodass eine Lage (3.1) über der oberen Hälfte (2) erzeugt wird, die aus dem stoßabsorbierenden Kunststoffmaterial (3) besteht.

6. Hohle Sohle für Schuhwerk nach einem der vorangegangenen Ansprüche, **dadurch gekennzeichnet, dass** das stoßabsorbierende Kunststoffmaterial (3) Polyurethan ist.

7. Hohle Sohle für Schuhwerk nach Anspruch 5,
**dadurch gekennzeichnet, dass** die Lage (3.1) über der oberen Hälfte (2) aus dem stoßabsorbierenden Kunststoffmaterial (3) besteht, wobei diese Hälfte (2) Durchgangsöffnungen (2.4) aufweist, die sich mit den Durchgangsöffnungen (3.2) der Lage (3.1) der oberen Hälfte (2) decken.

8. Herstellungsverfahren für eine Schuhwerksohle nach Anspruch 7, das die folgenden Stufen umfasst:
- Formen der oberen Hälfte (2),
- Formen der unteren Hälfte (1),
- Zusammenfügen der beiden Hälften (1,2),
- Einbringen des stoßabsorbierenden Materials (3) in die obere Hälfte (2) durch Einspritzen oder Gießen,
**dadurch gekennzeichnet, dass** vor dem Einbringen des stoßabsorbierenden Materials (3) in die obere Hälfte (2) der Schuhschnitt fluchtend auf der oberen Hälfte (2) platziert wird oder eine Gegenform so platziert wird, dass Platz zwischen der oberen Hälfte (2) und der Gegenform frei bleibt, sodass das stoßabsorbierende Material (3) eine Lage (3.1) auf der oberen Hälfte (2) der Sohle bildet.

9. Herstellungsverfahren für eine Schuhwerksohle nach Anspruch 8, **dadurch gekennzeichnet, dass** das stoßabsorbierende Kunststoffmaterial (3) Polyurethan ist.

## Revendications

1. Semelle creuse pour article chaussant comprenant une moitié inférieure (1) et une moitié supérieure (2), la moitié supérieure (2) comprenant à son tour une feuille (2.1) et des configurations verticales creuses (2.2) qui définissent des poches internes (2.3), la base creuse étant intégrée dans ladite feuille (2.1), lesdites configurations verticales creuses (2.2) étant orientées vers l'intérieur de la semelle, la moitié inférieure (1) étant disposée de sorte qu'elle soit en contact avec les surfaces des configurations verticales creuses (2.2) qui font face à l'intérieur de la semelle, les poches internes (2.3) des configurations verticales creuses (2.2) de la moitié supérieure (2) étant à demi remplies par un matériau plastique absorbant les chocs (3), les configurations verticales creuses (2.2) de la moitié supérieure (2) sont remplies de sorte qu'une chambre à gaz (4) soit ménagée entre l'avant du matériau absorbant les chocs (3) et la surface libre (2.2.1) des configurations verticales creuses (2.2), **caractérisée en ce que** la feuille (2.1) de la moitié supérieure (2) comprend des orifices traversants (2.4).

2. Semelle creuse pour article chaussant selon la revendication 1, **caractérisée en ce que** la moitié inférieure (1) comprend une feuille (1.1) et des configurations verticales creuses (1.2), qui forment des poches internes (1.3), la base étant intégrée dans ladite feuille (1.1) de sorte que lesdites configurations verticales creuses (1.2) soient tournées vers l'intérieur de la semelle de manière à venir au contact des surfaces des configurations creuses (1.2, 2.2) faisant face à l'intérieur de la semelle dans chacune des moitiés (1, 2).

3. Semelle creuse pour article chaussant selon les revendications 1 ou 2, **caractérisée en ce que** les configurations verticales creuses (1.2, 2.2) sont des pyramides tronquées, des cônes tronqués, des cylindres ou des prismes.

4. Semelle creuse pour article chaussant selon les revendications 1 ou 2, **caractérisée en ce que** les configurations verticales creuses (2.2) de la moitié supérieure (2) sont remplies jusqu'à la surface supérieure de la moitié supérieure (2).

5. Semelle creuse pour article chaussant selon les revendications 1 ou 2, **caractérisée en ce que** les configurations verticales creuses (2.2) de la moitié supérieure (2) sont remplies au-delà de la surface de dessus de la moitié supérieure (2), de sorte qu'une feuille (3.1) soit créée au-dessus de la moitié supérieure (2) composée du matériau plastique absorbant les chocs (3).

6. Semelle creuse pour article chaussant selon l'une quelconque des revendications précédentes, **caractérisée en ce que** le matériau plastique absorbant les chocs (3) est du polyuréthane.

7. Semelle creuse pour article chaussant selon la revendication 5, **caractérisée en ce que** la feuille (3.1) au-dessus de la moitié supérieure (2) est constituée du matériau plastique absorbant les chocs (3), cette moitié (2) ayant des orifices traversants (2.4) qui coïncident avec les orifices traversants (3.2) de la feuille (3.1) de la moitié supérieure (2).

8. Procédé de fabrication d'une semelle d'article chaussant selon la revendication 7, le procédé comprenant les étapes suivantes :
- mouler la moitié supérieure (2),
- mouler la moitié inférieure (1),
- relier les deux moitiés (1, 2),
- introduire le matériau absorbant les chocs (3) dans la moitié supérieure (2) par injection ou coulée
**caractérisé en ce que,** avant l'introduction du matériau absorbant les chocs (3) dans la moitié supérieure (2), la découpe de chaussure est placée à fleur sur la moitié supérieure (2) ou un contre-moule est placé pour laisser un espace entre la moitié supérieure (2) et ledit contre-moule, de sorte que le matériau absorbant les chocs (3) forme une feuille (3.1) sur la moitié supérieure (2) de la semelle.

9. Procédé de fabrication d'une semelle d'article chaussant selon la revendication 8, **caractérisé en ce que** le matériau plastique absorbant les chocs (3) est du polyuréthane.
